# EUROPÄISCHE PATENTSCHRIFT

(11) **EP 1 956 298 B1**
(45) Veröffentlichungstag und Bekanntmachung des Hinweises auf die Patenterteilung: **04.11.2015**
(21) Anmeldenummer: 08001616.5
(22) Anmeldetag: 29.01.2008
(51) Int. Cl.: F24B 1/183, F24B 9/04, F24H 9/20, F24B 1/187

(54) **Einzelfeuerungsstätte**
Single Fire Incinerator
Incinérateur a Foyer Unique

(30) Priorität: 07.02.2007 DE 102007005962
(43) Veröffentlichungstag der Anmeldung: 13.08.2008
(73) Patentinhaber: Spartherm Feuerungstechnik GmbH, 49324 Melle (DE)
(72) Erfinder: Schmatloch, Volker, 49324 Melle (DE)
(74) Vertreter: Pott, Ulrich

(56) Entgegenhaltungen:
- EP-A- 0 035 550
- EP-A- 0 044 401
- DE-A1- 3 004 601
- DE-A1- 3 202 952
- DE-A1-102005 016 674
- FR-A- 2 279 029
- FR-A- 2 477 678
- FR-A- 2 479 426
- FR-A- 2 602 313
- US-A- 4 275 705

## Beschreibung

Die Erfindung bezieht sich auf eine Einzelfeuerungsstätte wie eine Kaminanlage, einen Kaminofen oder dergleichen mit einem Feuerungsraum und einer mit dem Feuerungsraum verbundenen Abgasführung, der ein Abgaswärmetauscher zur Erwärmung einer Flüssigkeit für z.B. eine Heizungs- oder Brauchwasseranlage zugeordnet ist, wobei die Leitung der zu erwärmenden Flüssigkeit des Abgaswärmetauschers mit einem Sicherheitswärmetauscher verbindbar ist, der bei Ausfall eines Aggregates für den sicheren Betrieb des Abgaswärmetauschers wie beispielsweise einer Umwälzpumpe von einem Kühlmedium durchströmt werden.

Seit einigen Jahren werden in zunehmendem Maße Möglichkeiten zur Verringerung von CO2-Emissionen erörtert. CO2 gilt als bedeutendes Treibhausgas und wird meist durch Verbrennungsprozesse erzeugt. Dies hat zu einem nachweisbaren globalen Anstieg der CO2-Konzentration in der Atmosphäre geführt, wodurch globale Klimaveränderungen zu erwarten sind. Der Nutzung von Biomasse zur Wärmeerzeugung kommt eine seit längerem stärker wachsende Bedeutung bei den Bemühungen zu, einen weiteren Anstieg der CO2-Belastung der Atmosphäre zu verhindern. Holzbrennstoffe stellen dabei den weitaus größten Teil der energetisch nutzbaren Biomasse dar. Daher ist es wichtig, effizient und umweltschonend die Holzenergie zu nutzen.

Die Holzenergienutzung findet besonders im häuslichen Bereich statt. Dies bietet eine Reihe von Vorteilen wie etwa die Nutzung vorhandener Verteilsysteme für die lokal verfügbare Holzproduktion. Damit werden zugleich lokale Wertschöpfungsketten gestärkt und größere Transportwege vermieden.

Verbesserungen der Nutzung von Holzenergie im Bereich des Hausbrandes wurden durch Optimierungen der Verbrennungsqualität, etwa durch eine gestufte Zufuhr der Verbrennungsluft und durch Steigerung des Wirkungsgrades von Feuerstätten erreicht. Durch eine Kombination von Maßnahmen zur Minimierung schädlicher Emissionen und Maßnahmen zur verbesserten Energieausnutzung nähert man sich dem Ziel der verstärkten Biomassenutzung bei gleichzeitiger Entlastung der Umwelt.

Die erwünschten Wirkungssteigerungen sind bei Einzelfeuerungsstätten wie Kaminanlagen oder Kaminöfen durch eine verbesserte Wärmeabgabe an den Aufstellraum zu erreichen. Dazu wird der Anteil der Wärme, die durch Konvektion oder Strahlung zur Wohnraumheizung genutzt wird, erhöht, während die Wärmeverluste über die Abgase reduziert werden können. Infolge der stetigen Verbesserungen im Bereich der Wärmedämmung moderner Gebäude lassen sich bereits ganze Häuser mit geringen Leistungen von wenigen Kilowatt beheizen. Im Bereich der Einzelfeuerungsstätten kann dabei jedoch das Problem auftreten, dass die Wärme in Form von Strahlung oder Konvektion konzentriert im Aufstellraum der Feuerungsstätte anfällt, während entferntere Bereiche eines Wohnraumes kaum oder gar nicht beheizt werden. Daher ist es vorteilhaft, auch die Wärme aus Kaminanlagen oder Kaminöfen zu speichern oder in eine zentrale Heizungs- oder Brauchwasseranlage einzuspeisen. Eine Speicherung in Form von fester Speichermasse direkt am Ofen wie im traditionellen Kachelofen ist ein altbekannter Ansatz, um die anfallende Wärme über einen längeren Zeitraum zu verteilen. Das Problem der besseren räumlichen Verteilung wird damit jedoch nicht gelöst.

Zu diesem Zweck werden in jüngerer Zeit Kaminöfen oder Kaminanlagen vermehrt mit Flüssigkeitswärmetauschern ausgestattet. Diese sind im Bereich der Abgasführung der Kaminanlage oder der Kaminöfen installiert. Solche Flüssigkeitswärmetauscher haben flüssigkeitsdurchspülte Strömungssysteme, in denen ein Heizwasser erwärmt wird, so dass es anschließend in einer Zentralheizung genutzt werden kann oder aber auch zur Brauchwassererwärmung. Dazu ist der Flüssigkeitswärmetauscher im Kaminofen mit an ein Leitungssystem anzuschließen, das mit einem Wasserspeicher, z.B. einem Pufferspeicher, zu verbinden ist.

Problematisch ist hierbei, dass in der Feuerungsstätte Temperaturen erzeugt werden, mit denen Flüssigkeit sehr schnell und ohne weiteres in den Siedezustand gebracht werden kann. Deshalb ist eine hinreichende Durchströmung des Wärmetauschers sicherzustellen, um ein Aufkochen der Flüssigkeit in dem Wärmetauscher zu vermeiden. Um Sicherheitsrisiken vorzubeugen, ist daher ein zusätzlicher Sicherheitswärmetauscher vorzusehen, der im Störungsfalle, beispielsweise bei Ausfall einer Umwälzpumpe im Wärmetauscherkreislauf, sicherstellt, dass über diesen Sicherheitswärmetauscher eine Kühlung des Flüssigkeitskreislaufes bzw. des Abgasraumes des Wärmetauschers erfolgen kann. Dieser Sicherheitswärmetauscher ist im Bereich des Abgassystems vorzusehen und wird nur im Störfall z.B. mit kaltem Leitungswasser durchströmt, das dann nach Durchströmen des Sicherheitswärmetauschers einem Zentralabfluß zuzuführen ist. Dabei sind relativ große Kühlwassermengen zuzuführen, da bei Ausfall der Umwälzpumpe die im Abgaswärmetauscher eingeschlossene Flüssigkeitsmenge relativ gering ist, so dass die Gefahr des sich erhöhenden Wasserdampfdruckes und die daraus resultierende Gefahr einer Explosion relativ hoch ist.

Die EP-A-0 044 401 offenbart einen Heizkamin und einen Wärmetauscher für einen Heizkamin. Dabei ist ein flüssigkeitsführender Teil und ein frischluftführender Teil vorgesehen. Die erwärmte Flüssigkeit des die Flüssigkeit führenden Wärmetauscherteils hat Anschlussstutzen für den Wasserzulauf und für den Wasserablauf, die an eine Rohrleitung anschließbar sind und mit dem Wasserkreislauf einer Warmwasserheizungsanlage zu verbinden sind. Kommt es zu einem Ausfall von Pumpaggregaten, besteht die Gefahr des Siedens der eingefüllten Flüssigkeit, da vorliegend weitere Wärmetauscher zwecks Abfuhr überschüssiger Wärme oder zur Einstellung eines Temperaturgefälles nicht vorgesehen sind.

Aus der DE 30 04 601 A1 ist ein Durchbrandofen bekannt, bei dem in einem sich an den Verbrennungsraum anschließenden vertikalen Schacht ein Wärmetauscher angeordnet ist, der wiederum an das Leitungssystem einer Warmwasserheizung und eine Brauchwasserleitung angeschlossen werden kann. Ein Sicherheitswärmetauscher zur Abfuhr überschüssiger Wärme oder die Einstellung eines Temperaturgefälles zur Erzeugung eines Flüssigkeitsumlaufes innerhalb der wasserführenden Bauteile des Ofens werden nicht beschrieben. Daher besteht auch hier das Risiko, dass z.B. im Falle des Ausfalls einer Umwälzpumpe es zum Sieden des eingefüllten Wassers kommen kann.

Aus der FR 2 279 029 ist ebenfalls ein Ofen mit einem flüssigkeitsführenden Wärmetauscher bekannt, der an einen Radiator einer Raumheizung angeschlossen werden kann. Zusätzliche Wärmetauscher zur Abfuhr überschüssiger Wärme oder zur Einstellung eines Temperaturgefälles zur Erzeugung eines Flüssigkeitsumlaufes innerhalb der wasserführenden Bauteile des Ofens sind nicht vorgesehen, sodass auch hier die Gefahr des Siedens der eingefüllten Flüssigkeit im Falle des Ausfalls einer Umwälzpumpe besteht.

Aus der DE 32 02 952 A ist eine Feuerungsanlage mit einem in der Brennkammer anzuordnenden Röhrenwärmetauscher als Hauptwärmetauscher bekannt, der mit einer Heizungsanlage über einen Kaltwasservorlauf und einem Heizwasserrücklauf zu verbinden ist. Um im Falle der Überhitzung ein Sieden in dem Wassersystem zu verhindern, ist ein Sicherheitswärmetauscher vorgesehen, in dem eine Kühlschlange angeordnet ist, um die Flüssigkeit des Röhrenwärmetauschers nicht sieden zu lassen. Die von dem Sicherheitswärmetauscher gekühlte Heißwasserflüssigkeit strömt zurück in den Röhrenwärmetauscher, so dass die Heizungsanlage nicht mehr mit Heißwasser zu versorgen ist.

Aus der US-4,275,705 ist eine gattungsgemäße Einzelfeuerungsstätte nach dem Oberbegriff des Anspruchs 1 bekannt.

Es ist Aufgabe der vorliegenden Erfindung hier Abhilfe zu schaffen und eine Feuerungsstätte der eingangs genannten Art derart weiterzubilden, dass im Störungsfalle das Aufkochrisiko der in den Abgaswärmetauscherkreislauf eingefüllten Flüssigkeit vermindert ist.

Zur Lösung dieser Aufgabe zeichnet sich die Einzelfeuerungsstätte der eingangs genannten Art dadurch aus, dass die Vorlauf- und/oder die Rücklaufleitung des Hauptwärmetauschers durch einen weiteren Wärmetauscher geführt ist (sind), wobei über den weiteren Wärmetauscher der Ablauf und/oder der Zulauf des Sicherheitswärmetauschers geführt ist, so dass in diesem weiteren Wärmetauscher aufgrund der kälteren Temperatur des Wassers im Ablauf und/oder im Zulauf die Flüssigkeit im Flüssigkeitsablauf des Hauptwärmetauschers rückgekühlt werden kann, womit in der Rücklauf- und/oder der Vorlaufleitung des Hauptwärmetauschers ein Temperaturgefälle derart einstellbar ist, dass es mittels Thermosiphonwirkung trotz des Ausfalles des Aggregates wie beispielsweise einer Umwälzpumpe zu einem Flüssigkeitsumlauf kommt, der eine unzulässige Erhitzung der Vorlauf- und/oder Rücklaufleitung verhindert.

Damit ist eine Einzelfeuerungsstätte zur Verfügung gestellt, bei der mit einem relativ geringen baulichen Aufwand auch im Störfall, beispielsweise bei Ausfall der Umwälzpumpe im Strömungskreislauf des Abgaswärmetauschers, für die zur erwärmende Flüssigkeit eine Strömung in diesem Kreislauf allein aufgrund der Dichteunterschiede zwischen wärmerer und kälterer Flüssigkeit durchzuführen ist, da die wärmere, leichtere Flüssigkeit einen Auftrieb erfährt und nach oben steigt. Dies ist in baulicher Weise durch z.B. einen einzigen weiteren Wärmetauscher zu vollziehen, der an den Flüssigkeitskreislauf des Abgaswärmetauschers anzuschließen ist. Dieser kann beispielsweise von dem Zulauf, aber auch vom Ablauf des Sicherheitswärmetauschers gekühlt werden, so dass z.B. die vom Abgaswärmetauscher kommende erwärmte Flüssigkeit in diesem weiteren Wärmetauscher um eine gewisse Temperatur rückgekühlt wird, womit die Schwerkraftströmung aufgrund der eingestellten Temperaturdifferenz und der damit erzeugten Thermosiphonwirkung zu initiieren ist. Damit ergibt sich ein Naturumlauf im Strömungssystem und damit im Kreislauf des Abgaswärmetauschers, so dass immer wieder auch im Störungsfall bei nicht umlaufender Umwälzpumpe im Abgaswärmetauscher die zu erwärmende Flüssigkeit zirkuliert und dort unterhalb der Siedetemperatur gehalten werden kann. Ein durchaus interessanter und auch nutzbarer Zusatzeffekt ist, dass das so um nur eine gewisse Temperaturdifferenz gekühlte Wasser auch im Störungsfalle z.B. der Heizungs- oder Brauchwasseranlage zugeführt werden kann.

Es können ein oder weitere Wärmetauscher vorgesehen werden. Der oder die weiteren Wärmetauscher können selbstverständlich auch an den Zulauf des Abgaswärmetauschers angeschlossen werden. Ebenso ist es möglich, beispielsweise Temperaturdifferenzen dadurch einzustellen, dass ein Vorlauf und ein Rücklauf des Abgaswärmetauschers angeschlossen wird, da dadurch auch eine Temperaturdifferenz erzeugt werden kann. Ebenfalls ist es möglich, z.B. verschiedene Leitungsstränge eines Abgaswärmetauschervorlaufes und/oder -rücklaufes an den weiteren Wärmetauscher anzuschließen, wobei einer beispielsweise durch den Wärmetauscher direkt geführt ist und ein anderer neben dem Wärmetauscher mit einem gewissen Abstand vorbeiläuft. Wichtig ist, dass an diesem weiteren Wärmetauscher eine so große Temperaturdifferenz bei einer laufenden Verbrennung erzeugt wird, dass die Thermosiphonwirkung und damit die Schwerkraftströmung zu initiieren ist. Danach läuft diese kontinuierlich und fortlaufend ab.

Wesentliche weitere Vorteile und Ausgestaltungen der Erfindung ergeben sich aus weiteren Unteransprüchen, der nachfolgenden Beschreibung und der Zeichnung. In der Zeichnung zeigen:
- Abb. 1a: ein erstes Ausführungsbeispiel einer Feuerungsstätte nach der Erfindung in einem Schemaschaubild;
- Abb. 1b: ein alternatives Ausführungsbeispiel;
- Abb. 2: ein drittes alternatives Ausführungsbeispiel,
- Abb. 3: ein viertes alternatives Ausführungsbeispiel,
- Abb. 4: ein fünftes alternatives Ausführungsbeispiel,
- Abb. 5: ein sechstes alternatives Ausführungsbeispiel und
- Abb. 6: ein siebtes alternatives Ausführungsbeispiel.

In der Zeichnung sind schematisch nur die zum unmittelbaren Verständnis der Erfindung notwendigen Elementen der Einzelfeuerungsstätte dargestellt. In den jeweiligen Figuren und Abbildungen sind jeweils übereinstimmende Bauteile mit übereinstimmenden Bezugsziffern versehen. Allgemein mit 1 ist ein Abgaswärmetauscher beziffert, der oberhalb eines Kaminofens 7 im Bereich seiner nicht im einzelnen näher dargestellten Abgasführung angeordnet ist. Dieser Abgaswärmetauscher ist beim Erwärmen von Luft umströmt und im übrigen durch Konvektion aufzuheizen. Diesem Abgaswärmetauscher wird über eine Leitung 6 Wasser als zu erwärmende Flüssigkeit zugeführt (Rücklaufleitung), die in dem Bereich des Kaminofens nahe seiner nicht näher dargestellten Feuerungsraum entlanggeführt ist, um von dort ein gewisses Maß an Erwärmung zu erreichen.

Nach Durchströmen des Abgaswärmetauschers wird die zu erwärmende Flüssigkeit über die Leitung 9 abgeführt und z.B. einer Pufferstation einer Heizungsanlage zugeführt. Innerhalb des Raumes für den Wärmetauscher 1 ist ein nicht näher dargestellter Sicherheitswärmetauscher vorgesehen, dem über eine Leitung 4 im Störfall Leitungswasser zuzuführen ist. In der Leitung 4 ist ein Ventil angeordnet, das von einem Temperaturfühler gesteuert ist, das in der Tauchhülse 2 im Wärmetauscher 1 angeordnet ist. Des weiteren kann noch eine weitere Tauchdüse 8 beispielsweise für eine Pumpensteuerung vorgesehen werden.

Wird eine bestimmte Temperatur überschritten, öffnet das Ventil 3 und Wasser kann über die Leitung 4 eingeführt werden, um die Flüssigkeit des Kreislaufes des Abgaswärmetauschers 1 zu kühlen. Über die Leitung 11 wird das Wasser des Sicherheitswärmetauschers wieder abgeleitet und z.B. einem zentralen Abwasserrohr zugeführt. Der Ablauf 11 des Sicherheitswärmetauschers 1 ist über einen weiteren Wärmetauscher 5 geführt. Durch diesen weiteren Wärmetauscher 5 läuft auch die Ablaufleitung 9 (Vorlauf) des Abgaswärmetauschers 1, so dass in diesem Wärmetauscher 5 aufgrund der kälteren Temperatur des Wassers im Ablauf 11 des Sicherheitswärmetauschers die Flüssigkeit im Flüssigkeitskreislauf des Wärmetauschers 1 rückgekühlt werden kann, wodurch zwischen Einlass und Auslass des weiteren Wärmetauschers 5 eine Temperaturdifferenz erzeugt werden kann, womit innerhalb des Flüssigkeitskreislaufes des Abgaswärmetauschers 1 eine Natural- bzw. Schwerkraftströmung infolge einer Thermosiphonwirkung (Dichteunterschied) in Gang gesetzt werden kann. Damit ist auch im Störfalle und bei Ausfall einer Umwälzpumpe eine Umwälzung und Strömung der Flüssigkeit im Flüssigkeitskreislauf des Abgaswärmetauschers sicherzustellen.

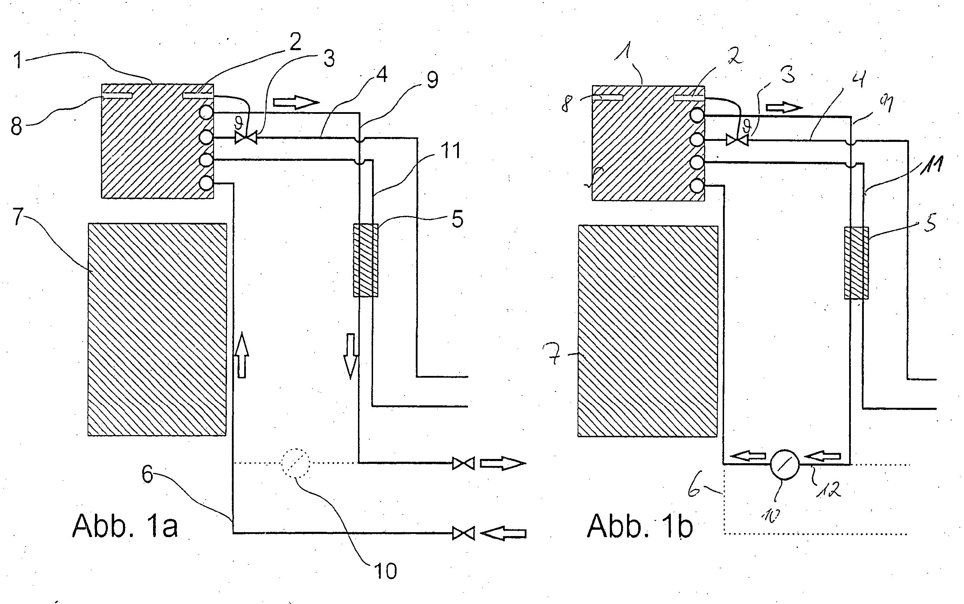

Wie Abb. 1 b bei ansonsten gleichem Aufbau zeigt, kann eine Bypassleitung 12 mit einer Rückschlagkappe zwischen Zulaufleitung 6 (Rücklauf) und Ablaufleitung 9 (Vorlauf) vorgesehen werden, um im Störfall einen unmittelbaren Kreislauf im Flüssigkeitskreislauf des Wärmetauschers unter Umgehung eines Puffers einer Heizungsanlagen vorliegen zu haben.

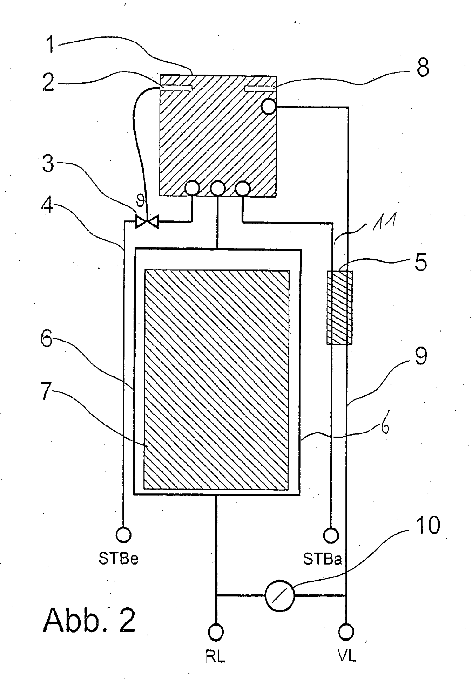

In dem Ausführungsbeispiel nach Abb. 2 hat der Rücklauf (RL) zwei parallele Rücklaufleitungsstränge 6, die die Einzelfeuerungsstätte im wesentlichen umgrenzen, dann wieder zusammengeführt sind mit einem Leitungsstrang dann an den Wärmetauscher 1 angeschlossen sind. Der Zulauf 4 des Sicherheitswärmetauschers (STBe = Sicherheitstemperaturbegrenzereinlaß) ist wiederum von einem Ventil 3 mit Temperaturfühler 2 gesteuert, wobei wiederum der Auslaß 11 des Sicherheitswärmetauschers an den weiteren Wärmetauscher 5 angeschlossen ist und danach zum Auslaß STBa führt (STBa = Sicherheitstemperaturbegrenzerauslaß). Ansonsten wirkt hierbei das Absorbtionsprinzip so, wie bereits vorstehend erörtert.

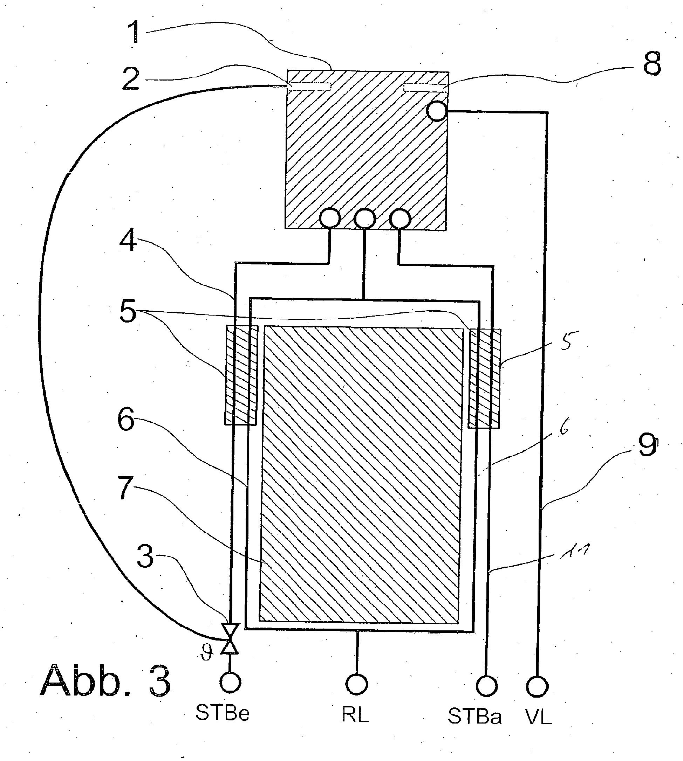

Im Ausführungsbeispiel nach Abb. 3 ist wiederum die Rücklaufleitung mit zwei Leitungssträngen 6 ausgebildet. Hierbei ist jeder Leitungsstrang an einen weiteren Wärmetauscher 5 angeschlossen. Diesem ist einmal der Zulauf 4 des Sicherheitswärmetauschers und dem anderen Wärmetauscher 5 der Ablauf 11 des Sicherheitswärmetauschers zugeordnet. Das am Temperaturfühler 2 gesteuerte Ventil 3 ist dabei in Strömungsrichtung des Wassersicherheitswärmetauschers in einem weiteren Wärmetauscher 5 vorgeordnet.

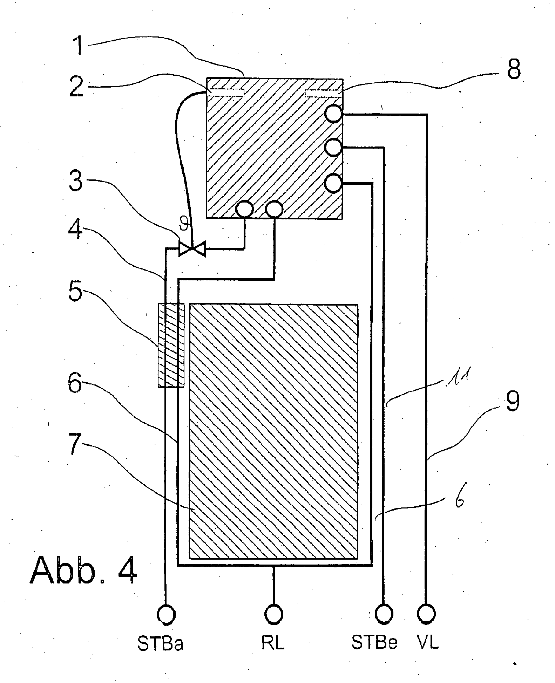

In dem Ausführungsbeispiel nach Abb. 4 ist der Ablauf 4 des Sicherheitswärmetauschers an den weiteren Wärmetauscher 5 angeschlossen und darüber hinaus ein Strang der Rücklaufleitung des Abgaswärmetauschers 11. Dabei ist in Strömungsrichtung des Wassers des Sicherheitswärmetauschers das von dem Temperaturfühler 2 gesteuerte Ventil 3 dem weiteren Wärmetauscher 5 vorgeordnet.

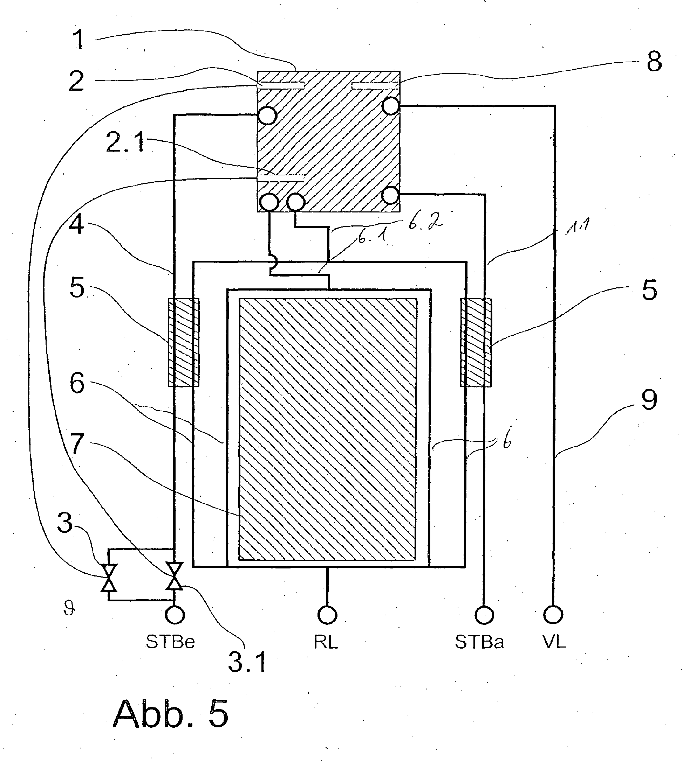

In dem Ausführungsbeispiel nach Abb. 5 sind wiederum zwei Stränge 6 der Rücklaufleitung des Abgaswärmetauschers vorgesehen, und zwar doppelte Stränge mit jeweils einem Paar von parallel angeordneten Leitungssträngen 6, wobei jeweils ein Strang der beiden Strangpaare 6 an eine in den Wärmetauscher einmündende Leitung 6.1 und die teilweise zusammenwirkenden anderen beiden Stränge in eine Endleitung 6.2 münden. Diese in die Leitung 6.2 mündenden Stränge sind jeweils an einen weiteren Wärmetauscher 5 angeschlossen, wobei einer von diesen an den Einlaß des Sicherheitswärmetauschers 4 und der andere an den Auslaß 11 des Sicherheitswärmetauschers angeschlossen sind. Hierbei ist wiederum ein von einem Temperaturfühler 2 gesteuertes Ventil 3 angeordnet und ein von einem Temperaturfühler 2.1 gesteuertes Ventil 3.1, so dass der Einlaß des Sicherheitsventils aufgrund der Bypassleitung auf unterschiedliche Temperaturen reagieren kann.

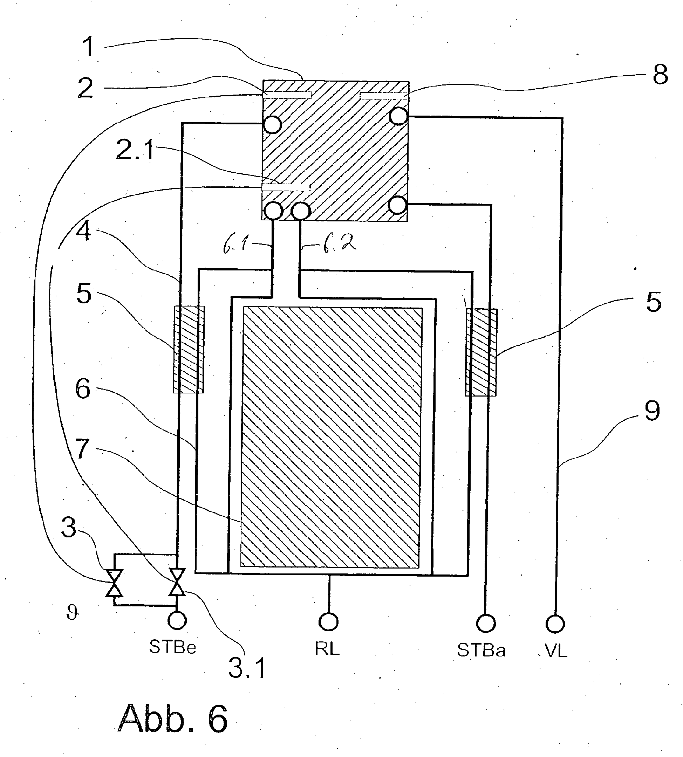

In dem Ausführungsbeispiel nach Abb. 6 münden die Stränge 6.1 und 6.2 nicht getrennt pro einem Strang der beiden Strangpaare. Vielmehr ist hierbei die Leitung 6.1 dem in der Abb. 6 linken Strangpaar und die Leistung 6.2 dem in der Abb. 6 rechten Strangpaar zugeordnet. Hierdurch kann auch jeweils gesteuert eine Temperaturdifferenz eingestellt werden mit der sich daraus ergebenden Natural- bzw. Schwerkraftströmung.

## Patentansprüche

1. Einzelfeuerungsstätte für chargenweisen Betrieb, wie z.B. eine mit Stückholz befeuerte Einzelfeuerungsstätte, insbesondere eine Kaminanlage, ein Kaminofen (7) oder dergleichen, mit einem Abgaswärmetauscher als Hauptwärmetauscher zur Erwärmung einer Flüssigkeit für z.B. eine Heizungs- oder Brauchwasseranlage zugeordnet ist, wobei in den Abgaswärmetauscher (1) ein Sicherheitswärmetauscher integriert ist, der bei Ausfall eines Aggregates für den sicheren Betrieb des Hauptwärmetauschers (1), wie beispielsweise einer Umwälzpumpe, von einem Kühlmedium durchströmt wird, **dadurch gekennzeichnet, dass** die Vorlauf- (9) und/oder die Rücklaufleitung (6) des Abgaswärmetauschers (1) durch einen weiteren Wärmetauscher (5) geführt ist (sind), wobei über den weiteren Wärmetauscher (5) der Ablauf (11) oder der Zulauf (4) des Sicherheitswärmetauschers geführt ist, so dass über diesen weiteren Wärmetauscher (5) aufgrund der kälteren Temperatur des Wassers im Ablauf (11) oder im Zulauf (4) die Flüssigkeit im Flüssigkeitsablauf des Hauptwärmetauschers (1) rückgekühlt werden kann, womit in der Rücklauf- (6) und/oder der Vorlaufleitung (9) des Hauptwärmetauschers (1) ein Temperaturgefälle derart einstellbar ist, dass es mittels Thermosiphonwirkung trotz des Ausfalles des Aggregates wie beispielsweise einer Umwälzpumpe zu einem Flüssigkeitsumlauf kommt, der eine unzulässige Erhitzung der Vorlauf- (9) und/oder Rücklaufleitung (6) verhindert.

2. Einzelfeuerungsstätte nach Anspruch 1, **dadurch gekennzeichnet, dass** die Vorlauf-(9) und die Rücklaufleitung (6) des Hauptwärmetauschers (1) über eine mit einer Rückschlagklappe (10) versehene Bypassleitung verbindbar ist, wobei die Rückschlagklappe (10) im Normalbetrieb den Rücklauf (6) gegen den Vorlauf (9) sperrt und im Störfall bei Schwerkraftströmung öffnet.

3. Einzelfeuerungsstätte nach einem der Ansprüche 1 oder 2, **dadurch gekennzeichnet, dass** die Vorlauf- (9) und/oder die Rücklaufleitung (6) des Hauptwärmetauschers (1) im Bereich des Feuerraumes der Einzelfeuerungsstätte verzweigt ausgebildet ist bzw. sind und die Einzelfeuerungsstätte zumindest im wesentlichen umläuft bzw. umlaufen.

4. Einzelfeuerungsstätte nach Anspnrch 1 bis 3, **dadurch gekennzeichnet, dass** die Vorlauf-(9) und/oder die Rücklaufleitung (6) des Hauptwärmetauschers (1) im Bereich des Feuerraumes der Einzelfeuerungsstätte verzweigt ausgebildet ist bzw. sind und über verschiedene Anschlussstellen derart mit dem Hauptwärmetauscher (1) verbunden sind, dass die Ausbildung der Schwerkraftströmung begünstigt wird.

5. Einzelfeuerungsstätte nach einem der Ansprüche 1 bis 4, **dadurch gekennzeichnet, dass** zwei oder mehr weitere Wärmetauscher zur Einstellung des Temperaturgefälles im Flüssigkeitskreislauf des Hauptwärmetauschers (1) vorgesehen sind.

6. Einzelfeuerungsstätte nach einem der Ansprüche 1 bis 5, **dadurch gekennzeichnet, dass** einer der weiteren Wärmetauscher an den Zulauf (4) des Sicherheitswärmetauschers und ein anderer weiterer Wärmetauscher an den Auslass (11) des Sicherheitswärmetauschers anschließbar ist.

7. Einzelfeuerungsstätte nach einem der Ansprüche 1 bis 6, **dadurch gekennzeichnet, dass** der Zulauf (4) des Sicherheitswärmetauschers ein Ventil (3) aufweist, das von einem Temperaturfühler im Bereich des Hauptwärmetauschers (1) steuerbar ist.

8. Einzelfeuerungsstätte nach einem der Ansprüche 1 bis 7, **dadurch gekennzeichnet, dass** der Zulauf (4) des Sicherheitswärmetauschers ein Ventil (3) aufweist, das von einem Temperaturfühler in einem besonders temperaturbeaufschlagten Bereich der Vorlauf- (9) oder Rücklaufleitung (6) steuerbar ist.

9. Einzelfeuerungsstätte nach einem der Ansprüche 7 oder 8, **dadurch gekennzeichnet, dass** das Ventil (3) in Strömungsrichtung des Zulaufes (4) des Sicherheitswärmetauschers dem weiteren Wärmetauscher nachgeordnet ist.

10. Einzelfeuerungsstätte nach einem der Ansprüche 1 bis 9, **dadurch gekennzeichnet, dass** der Rücklauf (6) bzw. der Vorlauf (9) des Hauptwärmetauschers (1) zwei parallel angeordnete doppelte Leitungsstränge aufweist, von denen jeweils eine Leitung derart mit einem oder mehreren weiteren Wärmetauschern verbunden ist bzw. selbst als Wärmetauschers ausgebildet ist, so dass sich parallel in beiden Strängen jeweils eine eigene Schwerkraftströmung ausbilden kann.

11. Einzelfeuerungsstätte nach einem der Ansprüche 1 bis 10, **dadurch gekennzeichnet, dass** einer oder mehrere weitere Wärmetauscher als Absorberelemente wie beispielsweise aus der Solartechnik bekannte Absorberplatten ausgebildet ist, bzw. sind.

12. Einzelfeuerungsstätte nach einem der Ansprüche 1 bis 11, **dadurch gekennzeichnet, dass** der Sicherheitswärmetauscherinnerhalb eines Raumes für den Hauptwärmetauscher (1) ausgebildet ist, wobei Zulauf (4) und Ablauf (11) des Sicherheitswärmetauschers mitsamt der Steuerung über ein thermisch betätigtes Ventil derart beibehalten werden, dass darüber und über weitere Wärmetauscher im Störfall überschüssige Wärme aus den Vorlauf- und/oder Rücklaufleitungen ableitbar ist.

## Claims

1. Single fire incinerator for batch operation, such as a single fire incinerator fired by logs, in particular a chimney system, a fireplace (7) or the like, comprising an exhaust-gas heat exchanger as a main heat exchanger for heating a fluid for a heating system or domestic water system, for example, a safety heat exchanger being integrated in the exhaust-gas heat exchanger (1) and through which safety heat exchanger a coolant flows if a unit for the safe operation of the main heat exchanger (1), such as a recirculating pump, malfunctions, **characterised in that** the flow pipe (9) and/or the return pipe (6) of the exhaust-gas heat exchanger (1) are guided through an additional heat exchanger (5), the outlet (11) or the inlet (4) of the safety heat exchanger being guided via the additional heat exchanger (5), so that the fluid in the fluid outlet of the main heat exchanger (1) can be recooled by said additional heat exchanger (5) due to the cooler temperature of the water in the outlet (11) or in the inlet (4), by means of which a temperature gradient can be set in the return pipe (6) and/or in the flow pipe (9) of the main heat exchanger (1) such that, by means of the thermosiphon effect and despite the malfunction of the unit such as a recirculating pump, fluid circulates and prevents the flow pipe (9) and/or the return pipe (6) from heating up in an unreliable manner.

2. Single fire incinerator according to claim 1, **characterised in that** the flow pipe (9) and the return pipe (6) of the main heat exchanger (1) can be connected by means of a bypass line which is provided with a non-return valve (10), the non-return valve (10) blocking the return pipe (6) from the flow pipe (9) in normal operation and opening under the effect of gravitational flow in the event of a malfunction.

3. Single fire incinerator according to either claim 1 or claim 2, **characterised in that** the flow pipe (9) and/or the return pipe (6) of the main heat exchanger (1) branch in the region of the combustion chamber of the single fire incinerator and at least substantially extend around the single fire incinerator.

4. Single fire incinerator according to claims 1 to 3, **characterised in that** the flow pipe (9) and/or the return pipe (6) of the main heat exchanger (1) branch in the region of the combustion chamber of the single fire incinerator and are connected to the main heat exchanger (1) by means of various connection points such that the development of the gravitational flow is promoted.

5. Single fire incinerator according to any of claims 1 to 4, **characterised in that** two or more additional heat exchangers are provided to set the temperature gradient in the fluid circuit of the main heat exchanger (1).

6. Single fire incinerator according to any of claims 1 to 5, **characterised in that** one of the additional heat exchangers can be connected to the inlet (4) of the safety heat exchanger and another of the additional heat exchangers can be connected to the outlet (11) of the safety heat exchanger.

7. Single fire incinerator according to any of claims 1 to 6, **characterised in that** the inlet (4) of the safety heat exchanger comprises a valve (3) which can be controlled by a temperature sensor in the region of the main heat exchanger (1).

8. Single fire incinerator according to any of claims 1 to 7, **characterised in that** the inlet (4) of the safety heat exchanger comprises a valve (3) which can be controlled by a temperature sensor in a region of the flow pipe (9) or the return pipe (6) which is particularly subject to increased temperatures.

9. Single fire incinerator according to either claim 7 or claim 8, **characterised in that** the valve (3) is arranged downstream of the additional heat exchanger in the flow direction of the inlet (4) of the safety heat exchanger.

10. Single fire incinerator according to any of claims 1 to 9, **characterised in that** the return pipe (6) and the flow pipe (9) of the main heat exchanger (1) comprise two parallel double pipe legs, one of which is connected to one or more additional heat exchangers in each case or is itself formed as a heat exchanger such that in each case, a separate gravitational flow can develop in parallel in both legs.

11. Single fire incinerator according to any of claims 1 to 10, **characterised in that** one or more additional heat exchangers are designed as absorber elements, such as absorber panels as known from solar technology, for example.

12. Single fire incinerator according to any of claims 1 to 11, **characterised in that** the safety heat exchanger is formed within a space for the main heat exchanger (1), the inlet (4) and outlet (11) of the safety heat exchanger, together with the controller, being retained by a thermally operated valve, such that excess heat can be dissipated from the flow pipe and/or return pipe by means of said valve and additional heat exchangers in the event of a malfunction.

## Revendications

1. Incinérateur à foyer unique pour un fonctionnement en régime discontinu, tel que par exemple un incinérateur à foyer unique alimenté avec du bois à brûler, en particulier une installation de cheminée, un poêle (7) ou équivalent, associé à un échangeur de chaleur de gaz d'échappement sous forme d'échangeur de chaleur principal pour réchauffer un liquide, par exemple pour une installation de chauffage ou d'eau non potable, un échangeur de chaleur de sécurité étant intégré dans l'échangeur de chaleur de gaz d'échappement (1) et, en cas de défaillance d'un appareil, par exemple d'une pompe de recirculation, traversé par un agent de refroidissement pour la sécurité de fonctionnement de l'échangeur de chaleur principal (1),
**caractérisé en ce que** la conduite aller (9) et/ou retour (6) de l'échangeur de chaleur de gaz d'échappement (1) est (sont) guidée(s) par un échangeur de chaleur (5) supplémentaire, l'évacuation (11) ou l'alimentation (4) de l'échangeur de chaleur de sécurité étant guidé par l'échangeur de chaleur (5) supplémentaire de telle sorte que le liquide peut être refroidi en retour dans l'évacuation de liquide de l'échangeur de chaleur principal (1) par cet échangeur de chaleur (5) supplémentaire en raison de la température plus froide de l'eau dans l'évacuation (11) ou dans l'alimentation (4), ce qui permet de régler une baisse de température dans la conduite retour (6) et/ou aller (9) de l'échangeur de chaleur principal (1) de manière à arriver, au moyen d'un effet thermosiphon et malgré la défaillance de l'appareil, tel que par exemple d'une pompe de recirculation, à une circulation de liquide qui empêche un réchauffement non autorisé de la conduite aller (9) et/ou retour (6).

2. Incinérateur à foyer unique selon la revendication 1, **caractérisé en ce que** la conduite aller (9) et la conduite retour (6) de l'échangeur de chaleur principal (1) peuvent être reliées par une conduite de dérivation munie d'un clapet anti-retour (10), le clapet anti-retour (10) fermant le retour (6) contre l'aller (9) en fonctionnement normal et l'ouvrant en cas d'incident lors de l'écoulement par gravité.

3. Incinérateur à foyer unique selon une des revendications 1 ou 2, **caractérisé en ce que** la conduite aller (9) et/ou la conduite retour (6) de l'échangeur de chaleur principal (1) est ou sont réalisée(s) ramifiée(s) au niveau du foyer de l'incinérateur à foyer unique et tourne ou tournent au moins sensiblement autour de cet incinérateur.

4. Incinérateur à foyer unique selon la revendication 1 à 3, **caractérisé en ce que** la conduite aller (9) et/ou la conduite retour (6) de l'échangeur de chaleur principal (1) est ou sont réalisée(s) ramifiée(s) au niveau du foyer de l'incinérateur à foyer unique et sont reliée(s) à l'échangeur de chaleur principal (1) par l'intermédiaire de différents points de connexion de manière à favoriser la réalisation de l'écoulement par gravité.

5. Incinérateur à foyer unique selon une des revendications 1 à 4, **caractérisé en ce que** deux échangeurs de chaleur supplémentaires ou plus sont prévus et destinés à régler la baisse de température dans le circuit liquide de l'échangeur de chaleur principal (1).

6. Incinérateur à foyer unique selon une des revendications 1 à 5, **caractérisé en ce qu'**un des échangeurs de chaleur supplémentaires peut être raccordé à l'alimentation (4) de l'échangeur de chaleur de sécurité et un autre échangeur de chaleur supplémentaire peut être raccordé à la sortie (11) de l'échangeur de chaleur de sécurité.

7. Incinérateur à foyer unique selon une des revendications 1 à 6, **caractérisé en ce que** l'alimentation (4) de l'échangeur de chaleur de sécurité présente une soupape (3)" qui peut être commandée par un capteur de température au niveau de l'échangeur de chaleur principal (1).

8. Incinérateur à foyer unique selon une des revendications 1 à 7, **caractérisé en ce que** l'alimentation (4) de l'échangeur de chaleur de sécurité présente une soupape (3) qui peut être commandée par un capteur de température dans une zone de la conduite aller (9) ou retour (6) particulièrement sollicitée en température.

9. Incinérateur à foyer unique selon une des revendications 7 ou 8, **caractérisé en ce que** la soupape (3) est disposée en aval de l'échangeur de chaleur supplémentaire dans la direction d'écoulement de l'alimentation (4) de l'échangeur de chaleur de sécurité.

10. Incinérateur à foyer unique selon une des revendications 1 à 9, **caractérisé en ce que** le retour (6) ou l'aller (9) de l'échangeur de chaleur principal (1) présente deux gaines de conduites doubles disposées parallèlement, chaque conduite étant reliée à un ou plusieurs échangeurs de chaleur supplémentaires ou est réalisée elle-même sous forme d'échangeur de chaleur, de telle sorte qu'un écoulement par gravité propre peut se former respectivement parallèlement dans les deux gaines.

11. Incinérateur à foyer unique selon une des revendications 1 à 10, **caractérisé en ce qu'**un ou plusieurs échangeur(s) de chaleur supplémentaire(s) est ou sont réalisé(s) sous forme d'éléments d'absorbeurs tels que par exemple de plaques d'absorbeurs connues d'après la technique solaire.

12. Incinérateur à foyer unique selon une des revendications 1 à 11, **caractérisé en ce que** l'échangeur de chaleur de sécurité est réalisé à l'intérieur d'une chambre pour l'échangeur de chaleur principal (1), l'alimentation (4) et l'évacuation (11) de l'échangeur de chaleur de sécurité étant maintenus avec la commande par une soupape d'actionnement thermique de telle sorte que, grâce à celle-ci et à un échangeur de chaleur supplémentaire la chaleur excessive peut être dérivée des conduites aller et/ou retour en cas d'incident.
